# EUROPEAN PATENT APPLICATION

(11) **EP 4 708 132 A1**
(43) Date of publication of application: **11.03.2026**
(21) Application number: 24940892.3
(22) Date of filing: 21.11.2024
(51) Int. Cl.: G06K 19/077, G06K 19/07, H01Q 11/08

(54) **WIRELESS RFID TAG TO BE EMBEDDED IN TIRE, AND MANUFACTURING METHOD THEREFOR**

(30) Priority: 24.07.2024 KR 20240098101
(71) Applicant: Wiscon Co., Ltd., Ansan-si, Gyeonggi-do 15607 (KR)
(72) Inventor: RYU, Gil Soo, Suwon-si, Gyeonggi-do 16706 (KR)
(74) Representative: Isarpatent
(86) International application number: PCT/KR2024/018494
(87) International publication number: WO 2026/023752

(57) **Abstract**

The present disclosure relates to a wireless RFID tag to be embedded in a tire. The wireless RFID tag to be embedded in a tire according to an exemplary embodiment of the present disclosure includes: a PCB substrate having a predetermined length; an antenna which has a predetermined length and is formed in a helical shape to be fitted along a length direction of the PCB substrate; and an RFID chip which is installed in a center portion of the PCB substrate and wirelessly receives data from the antenna, and is technically characterized in that a front/rear width of an inside configured by the helical shape of the antenna is formed to be larger than a front/rear width of the PCB substrate so that the PCB substrate and the antenna are spaced apart from each other with a predetermined interval to form a space and a part of the antenna is inserted into the protective cap to maintain a constant interval between the RFID chip and the antenna.

## Description

### [TECHNICAL FIELD]

The present disclosure relates to a wireless RFID tag to be embedded in a tire, and more particularly, to a wireless RFID tag to be embedded in a tire in which a rubber is inserted between an antenna and a substrate during the tire vulcanization process to allow an RFID tag to be completely embedded in the tire and a manufacturing method thereof.

### [BACKGROUND ART]

It is necessary for a vehicle tire to promptly identify unique information for each tire, such as a model type, a manufacturing number, a specification, a characteristic, a processing history, and a usage history, for the purpose of manufacturing management, shipment and distribution management.

In particular, under the Product Liability Act, if a product defect causes damage to another person's life, body, or property, the manufacturer is held liable for such loss regardless of negligence so the manufacturer needs to thoroughly manage each tire.

Accordingly, the tire manufacturer attaches an RFID tag to store a product history and a usage history to manage each tire.

Most RFID tags of the related art are of a helical type. However, the helical type RFID tag with a hollow helical structure is inserted into the tire so that the air in the helical structure is not completely discharged. That is, the RFID tag of the related art is inserted into the tire in a state where air remains in the helical structure to be manufactured as a product, which may serve as a defective factor.

For example, there may be problems in that bubbles may be generated in the tire, which may cause the degradation of the adhesive strength of the RFID tag to be easily separated and further the durability of the tire in which the RFID tag is embedded may be degraded due to consistently applied impacts caused by a road condition or a state of the vehicle while driving the vehicle.

In order to solve the problems, even though an RFID tag in which an antenna is embedded in the substrate has been developed, in the case of the RFID tag with an embedded antenna, only the substrate is directly attached to the tire so that the substrate attached to the tire may be easily broken, which results in insufficient durability.

Further, in the related art, a chip of the RFID tag is physically directly coupled to the antenna and is attached or embedded inside the tire so that the RFID tag is not recognized due to physical disconnection between the chip and the antenna.

A manufacturing method of the RFID tag needs to be studied to solve the above-mentioned problems.

### [RELATED ART DOCUMENT]

### [PATENT DOCUMENT]

(Patent Document 1) Korean Registered Patent No. 10-2332843 (November 25, 2021)

### [DISCLOSURE]

### [TECHNICAL PROBLEM]

An object to be achieved by the present disclosure is to provide a wireless RFID tag to be embedded in a tire in which a rubber is inserted between an antenna and a substrate during tire vulcanization process to allow the RFID tag to be completely embedded in the tire and a wireless RFID tag is applied to prevent a problem in that the RFID tag is not recognized due to the physical disconnection between the chip and the antenna and an installation interval between the chip and the antenna is completely fixed to maintain a high recognition rate while applying a wireless manner and a manufacturing method thereof.

### [TECHNICAL SOLUTION]

In order to achieve the technical objects as described above, according to an aspect of the present disclosure, a wireless RFID tag to be embedded in a tire includes: a PCB substrate having a predetermined length; an antenna which has a predetermined length and is formed in a helical shape to be fitted along a length direction of the PCB substrate; and an RFID chip which is installed in a center portion of the PCB substrate and wirelessly receives data from the antenna, and a front/rear width of an inside configured by the helical shape of the antenna is formed to be larger than a front/rear width of the PCB substrate so that the PCB substrate and the antenna are spaced apart from each other with a predetermined interval to form a space.

In the wireless RFID tag to be embedded in a tire according to an exemplary embodiment of the present disclosure, fitting holes are formed in a left side and a right side of the PCB substrate, fitting holes are formed in a left side and a right side of the PCB substrate, and one end of the antenna may be fitted into the left fitting hole of the PCB substrate and the other end of the antenna may be coupled to the right fitting hole of the PCB substrate.

The wireless RFID tag to be embedded in a tire according to an exemplary embodiment of the present disclosure may further include a protective cap molded on the PCB substrate to protect the RFID chip,

In the wireless RFID tag to be embedded in a tire according to an exemplary embodiment of the present disclosure, at least one rubber insertion hole may be formed along a length direction of the PCB substrate.

According to an aspect of the present disclosure, a manufacturing method of a wireless RFID tag to be embedded in a tire includes: a step of preparing a PCB substrate attached with an RFID chip which wirelessly receives data from an antenna; a step of preparing a metal antenna which has a predetermined length and is formed in a helical shape, in which a front/rear width of the inside configured by the helical shape is larger than a front/rear width of the PCB substrate; and a step of inserting the antenna into an end of the PCB substrate to be fitted.

Further, the manufacturing method of a wireless RFID tag to be embedded in a tire according to an exemplary embodiment of the present disclosure may further include a step of molding a protective cap on the PCB substrate coupled with the antenna; a step of applying a primer on the PCB substrate; and a step of applying a rubber solution on the PCB substrate.

The manufacturing method of a wireless RFID tag to be embedded in a tire according to an exemplary embodiment of the present disclosure may further include a step of forming at least one rubber insertion hole along a length direction of the PCB substrate.

### [ADVANTAGEOUS EFFECTS]

According to the present disclosure, the rubber is inserted between the antenna and the substrate during the tire vulcanization process so that the RFID tag is completely embedded in the tire, thereby improving an adhesive strength of the RFID tag to the tire and improving the durability.

Further, according to the present disclosure, there is no need for the RFID chip and the antenna to be physically and directly connected so that as compared with the related art that the RFID tag is inoperative due to the physical disconnection between the RFID chip and the antenna, direct physical connection is not originally necessary. Accordingly, when the RFID tag is embedded in the tire, the improved service life and the durability can be achieved.

Further, according to the present disclosure, a wireless coupling manner is applied so that after the antenna receives data, the RFID chip wirelessly receives the data from the antenna. Accordingly, the problem of the related art in that the RFID tag is not recognized by an RFID reader due to the physical disconnection between the chip and the antenna may be prevented in advance.

Further, according to the present disclosure, a protective cap is formed by the epoxy coating so that the installation interval between the RFID chip and the antenna is completely fixed, thereby maintaining a high recognition rate while applying a wireless coupling manner.

Further, according to the present disclosure, excellent adhesive strength of the RFID tag to the tire may be maintained for a long time so that the durability of the tire with an RFID tag attached thereto may be further improved.

### [DESCRIPTION OF DRAWINGS]

FIG. 1 is a perspective view of a wireless RFID tag to be embedded in a tire according to an exemplary embodiment of the present disclosure.
FIG. 2 is a plan view of a wireless RFID tag to be embedded in a tire according to an exemplary embodiment of the present disclosure.
FIG. 3 is a side view of a wireless RFID tag to be embedded in a tire according to an exemplary embodiment of the present disclosure seen from the front side.
FIG. 4 is a state view of a wireless RFID tag to be embedded in a tire manufactured according to an exemplary embodiment of the present disclosure.
FIG. 5 is a side view of a wireless RFID tag to be embedded in a tire according to an exemplary embodiment of the present disclosure.

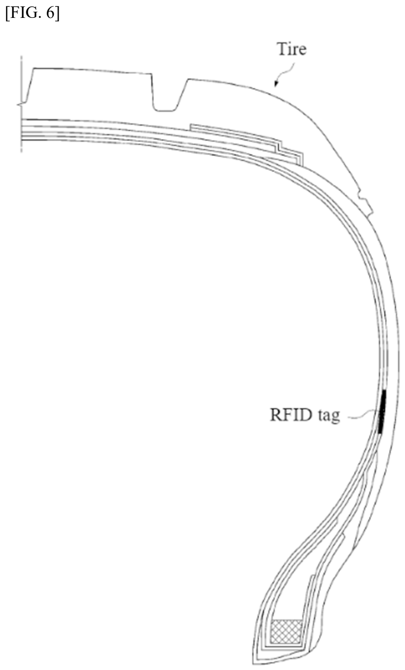

FIG. 6 is a partial cross-sectional view of a normal tire to which an RFID tag according to an exemplary embodiment of the present disclosure is attached.
FIG. 7 is a flowchart for explaining a manufacturing method of a wireless RFID tag to be embedded in a tire according to an exemplary embodiment of the present disclosure.

### [BEST MODE]

Hereinafter, a manufacturing method of a wireless RFID tag to be embedded in a tire with improved durability and adhesive strength according to the present disclosure will be described in more detail with reference to specific examples. However, the following exemplary embodiments are provided for sufficiently conveying the spirit of the present disclosure to those skilled in the art.

Therefore, the present disclosure is not limited to the following exemplary embodiments but can be specified in other forms. The following exemplary embodiments are provided solely for the purpose of clearly describing the spirit of the present disclosure, but the present disclosure is not limited thereto.

At this time, unless otherwise defined, technical and scientific terms used herein have the same meanings as commonly understood by those skilled in the art to which the present disclosure pertains. The terms are defined considering the functions in the present disclosure and may vary depending on the intention or usual practice of the user or operator. Accordingly, the terms need to be defined based on details throughout this specification. Further, the description of a known function and configuration that may make the gist of the present disclosure unnecessarily ambiguous will be omitted.

In addition, singular forms used in the specification and the appended claims are intended to include plural forms as well, unless the context clearly indicates otherwise.

Hereinafter, the present disclosure will be described in detail.

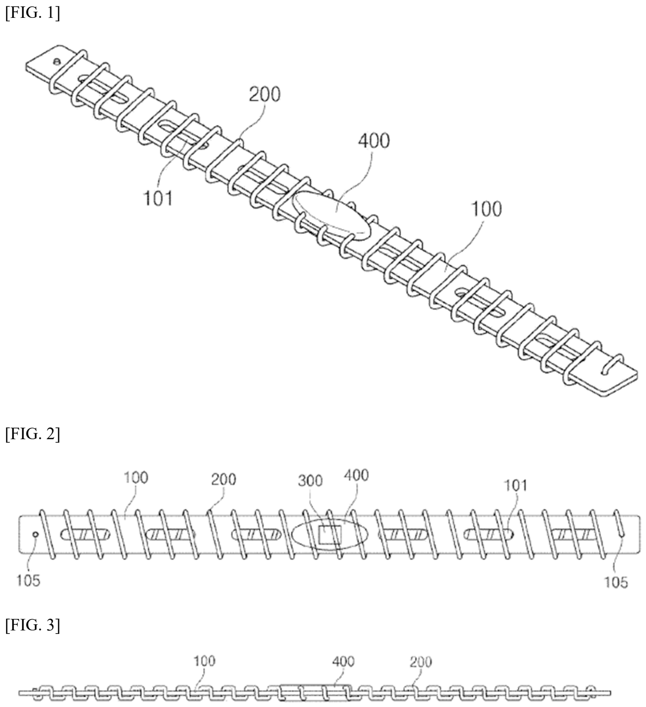

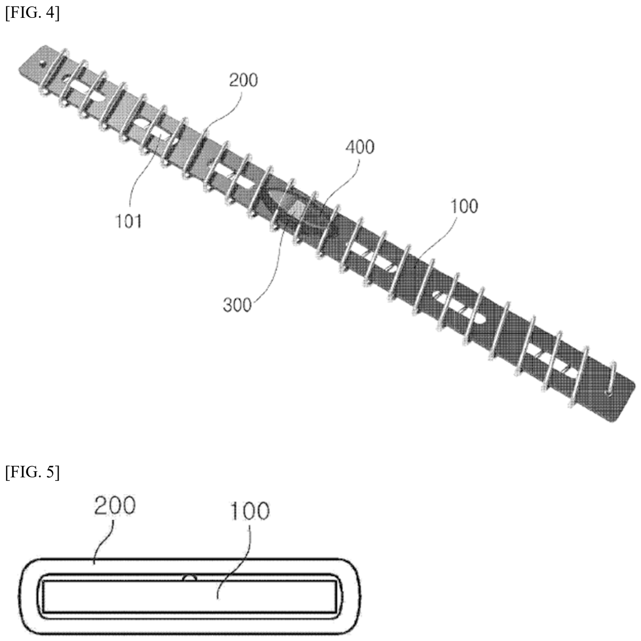

FIG. 1 is a perspective view of a wireless RFID tag to be embedded in a tire according to an exemplary embodiment of the present disclosure. FIG. 2 is a plan view of a wireless RFID tag to be embedded in a tire according to an exemplary embodiment of the present disclosure. FIG. 3 is a side view of a wireless RFID tag to be embedded in a tire according to an exemplary embodiment of the present disclosure seen from the front side. FIG. 4 is a state view of a wireless RFID tag to be embedded in a tire manufactured according to an exemplary embodiment of the present disclosure.

Referring to FIGS. 1 to 4, a wireless RFID tag to be embedded in a tire according to an exemplary embodiment of the present disclosure includes: a PCB substrate 100 having a predetermined length; an antenna 200 which has a predetermined length and is formed in a helical shape to be fitted along a length direction of the PCB substrate 100; and an RFID chip 300 which is installed in a center portion of the PCB substrate and wirelessly receives data from the antenna 200. As a front/rear width of the inside configured by the helical shape of the antenna 200 is formed to be larger than a front/rear width of the PCB substrate 100 so that the PCB substrate 100 and the antenna 200 are spaced apart from each other to form a space.

In the present disclosure, the PCB substrate refers to a printed circuit board (PCB) and is a product configuration in which a substrate laminated with a copperplate is subject to pattern printing and etching techniques to complete a copperplate for a wiring line in a single shape. The printed circuit board configured as described above is typically mounted with components, such as semiconductors, capacitors, or resistors to be used for various electronic devices, such as home appliances, computers, mobile communication devices, or artificial satellites.

The PCB substrate 100 may use paper phenol, glass fiber epoxy (FR-4), glass cloth-based epoxy (CEM-1, CEM-3), teflon, metal, or ceramic, but is not limited thereto. Desirably, the FR-4 (flame retardant-4) material may be used for the PCB substrate.

When FR-4 is used for the PCB substrate 100, the RFID tag may be formed to be light and thin and have a high heat resistance. A circuit of the PCB substrate 100 may be printed with gold and copper and the PCB substrate 100 may desirably have a thickness of 0.1 to 0.5 mm, a width of 1 to 5 mm, and a length of 25 to 75 mm. More desirably, the thickness may be 0.3 mm, the width may be 3.5 mm, and the length may be 40 mm. When the PCB substrate has a thickness of 0.2 mm, a width of 3 mm, and a length of 40 mm, even though the PCB substrate is inserted into the tire, the degradation of the tire's original performance may be small, and a recognition error may be reduced.

In the present disclosure, the PCB substrate 100 is formed to be flat and have a predetermined length. The antenna 200 has a predetermined length and is formed in a helical shape to be fitted along the length direction of the PCB substrate 100. As the front/rear width of the inside configured by the helical shape of the antenna 200 is larger than a front/rear width of the PCB substrate 100, the PCB substrate 100 and the antenna 200 may be spaced apart from each other with a predetermined interval to form a space.

At this time, fitting holes are formed in a left side and a right side of the PCB substrate 100 and one end and the other end of the antenna 200 may be coupled to the fitting holes of the left side and the right side of the PCB substrate 100, respectively.

For reference, the antenna 200 may be formed of a metal material and for example, may be formed of steel wire coated with yellow brass. Further, the antenna 200 may be formed in a helical shape or a spring shape and the number of turns may be 8 to 12.

Further, the antenna 200 may be formed in various shapes, such as a circular shape, a quadrangular shape, or a horizontal shape and at this time, the number of turns may be appropriately selected between 6 and 20.

As described above, in the wireless RFID tag to be embedded in a tire according to an exemplary embodiment of the present disclosure, the antenna 200 is not completely adhered to the PCB substrate 100, but is spaced apart therefrom with a predetermined interval to form a space. The space may improve the adhesive strength when the RFID tag is attached to the tire and improve the durability after the adhering, which enables long-term use.

Further, according to the exemplary embodiment of the present disclosure, the RFID chip 300 and the antenna 200 need to be spaced apart from each other with a predetermined interval and the predetermined interval may be maintained as initially designed and installed. In particular, in the present disclosure, the PCB substrate 100 and the antenna 200 are formed to have a predetermined length so that it is important to maintain an initially installed state and structure in the length direction (axis direction) of the PCB substrate 100 and the antenna 200.

If the interval between the RFID chip 300 and the antenna 200 is changed from the initially installed state, there may be an error in a data transmission/reception rate between wirelessly coupled RFID chip 300 and antenna 200, which may result in degradation of the recognition rate through the RFID reader.

In particular, the present disclosure relates to the RFID tag to be embedded in the tire so that the interval between the RFID chip 300 and the antenna 200 needs to be constantly maintained even under harsh conditions after being embedded in the tire.

In the present disclosure, the protective cap 400 to be described below is formed to completely fix the (initially installed) interval between the RFID chip 300 and the antenna 200 to always consistently maintain a data transmission/reception rate between the wirelessly coupled RFID chip 300 and the antenna 200 to suppress degradation of the recognition rate by the RFID reader, thereby maintaining a high quality.

The RFID tag is attached to the tire and more particularly, is buried in the tire at a predetermined depth.

In the present disclosure, a rubber which configures the tire is inserted into the space and the helical type structure and the RFID tag are completely integrated with the rubber to be buried into the tire and the inserted tire rubber holds both the PCB substrate 100 and the antenna 200 so that the adhesive strength of the RFID tag to the tire is improved. Further, the improvement of the adhesive strength further improves the durability of the tire.

The RFID chip 300 of the wireless RFID tag to be embedded in a tire according to an exemplary embodiment of the present disclosure may be configured to wirelessly receive data from the antenna 200.

Therefore, according to the present disclosure, there is no need for the RFID chip 300 and the antenna 200 to be physically and directly connected so that as compared with the related art that the RFID tag is inoperative due to the physical disconnection between the RFID chip 300 and the antenna 200, direct physical connection is not necessary in the first place. Accordingly, when the RFID tag is embedded in the tire, improved service life can be achieved.

Further, the wireless RFID tag to be embedded in a tire according to the exemplary embodiment of the present disclosure may be configured to include a protective cap 400 formed on the PCB substrate 100 so as to protect the RFID chip 300.

The protective cap 400 needs to be formed to be larger than the RFID chip 300 to protect the RFID chip 300.

If necessary, the protective cap 400 is formed to also cover the antenna 200 to further improve the durability.

For example, as illustrated in FIG. 1, specifically, the antenna 200 is inserted into the protective cap 400. The protective cap 400 is molded after coupling the antenna 200, so that the antenna 200 is inserted into the protective cap 400. By doing this, the protective cap 300 is molded in a center portion of the antenna 200 to be firmly held to further improve the stability. Therefore, when the RFID tag is embedded in the tire, the durability and the service life may be improved.

Further, as illustrated in FIG. 3, the protective cap 300 may be formed on both a front surface and a rear surface of the PCB substrate 100 to completely fix the antenna 200.

That is, as the protective cap 300 is formed to completely fix the (initially installed) interval between the RFID chip 300 and the antenna 200 to constantly maintain the data transmission/reception rate between the wirelessly coupled RFID chip 300 and antenna 200.

Further, the protective cap 300 may have an oval shape as illustrated in the drawing, but may be formed to have a rectangular shape if necessary.

The wireless RFID tag to be embedded in a tire according to an exemplary embodiment of the present disclosure may have at least one rubber insertion hole 101 formed along a length direction of the PCB substrate 100.

As illustrated in FIG. 2, three rubber insertion holes 101 may be formed at each of a left side and a right side of the PCB substrate 100.

A rubber which configures the tire may be inserted into the rubber insertion hole 101 so that the RFID tag is completely integrated with the rubber to be embedded in the tire. Further, the tire rubber which is inserted as described above serves to hold both the PCB substrate 100 and the antenna 200 so that the adhesive strength of the RFID tag to the tire may be further improved.

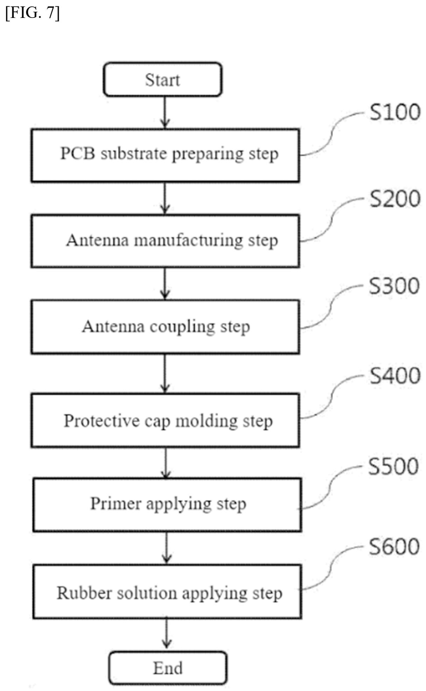

FIG. 7 is a flowchart for explaining a manufacturing method of a wireless RFID tag to be embedded in a tire according to an exemplary embodiment of the present disclosure.

Referring to FIG. 7, a manufacturing method of a wireless RFID tag to be embedded in a tire according to an exemplary embodiment of the present disclosure may include: a step S100 of preparing a PCB substrate 100 with an RFID chip 300 attached thereto; a step S200 of preparing a metal antenna 200 which has a predetermined length and is formed in a helical shape, in which a front/rear width of the inside configured by the helical shape is larger than a front/rear width of the PCB substrate 100; and a step S300 of inserting the antenna 200 to one end of the PCB substrate 100 to be fitted.

The step S100 is a step of preparing a PCB substrate 100 with an RFID chip 300 attached thereto. For example, a front/rear width of the PCB substrate 100 may be 0.1 to 0.5 mm, and desirably, 0.3 mm. At this time, the front/rear width of the PCB substrate 100 is based on FIG. 1 or 2.

Further, in the step S100 of preparing a PCB substrate, the RFID chip 300 may be attached to the PCB substrate 100 and a fitting hole 105 to which an end of the antenna 200 is inserted to be coupled after inserting the antenna 200.

For example, the fitting holes 105 may be formed at the left side and the right side of the PCB substrate 100.

The step S200 is a step of preparing a metal antenna 200 which has a predetermined length and is formed in a helical shape, in which a front/rear width of the inside configured by the helical shape is larger than a front/rear width of the PCB substrate 100. For example, the antenna 200 may be manufactured with stainless steel (steel wire) as a main material. For example, a front/rear width of the inside configured by the helical shape, that is, a width of an internal space of the antenna 200 may be 0.15 to 1.0 mm and desirably, 0.35 mm. At this time, the width of the internal space of the antenna 200 is based on FIG. 1 or 2.

Further, a diameter of the antenna 200 may be manufactured to be 0.15 mm to 0.35 mm, and desirably, may be 0.22 mm to 0.25 mm.

The step S300 is a step of inserting the antenna 200 into one end of the PCB substrate 100 to be fitted and the antenna 200 manufactured in a helical shape is fitted. Referring to FIG. 2, the antenna 200 may be fitted to a left or right end of the PCB substrate 100 to be coupled.

For example, one end of the antenna 200 may be coupled to the left side of the PCB substrate 100 and the other end of the antenna 200 may be coupled to the right side of the PCB substrate 100.

Further, in the manufacturing method of a wireless RFID tag to be embedded in a tire according to an exemplary embodiment of the present disclosure, in the step S100 of preparing a PCB substrate, a surface mount technology and coating with a permanent ink may be performed.

The permanent ink used for the permanent ink coating may include UV ink, thermosetting ink (IR ink), photo imageable solder resist ink (PSR ink), but is not limited thereto. Desirably, the photo imageable solder resist black (PSR black) may be used. When the photo imageable solder resist black is used as the permanent ink, a thermosetting component and a photo curable component are mixed to form a desired image by means of exposure and development.

A modified ink is photosensitive so that when the modified ink is exposed to ultraviolet ray, only a part exposed to the light is cured, but the remaining part is removed using a developer. The permanent ink protects a circuit attached to the PCB substrate and suppresses a solder bridge phenomenon caused between the circuits during a wave soldering process which is accompanied when a component is mounted on the PCB substrate.

The permanent ink may include 10 to 45 parts by weight of epoxy acrylate oligomer, 0.5 to 5 parts by weight of 1,3,5-triglycidyl isocyanurate, 1 to 20 parts by weight of epoxy resin, acrylate resin, 3 to 15 parts by weight of photoinitiator, 10 to 30 parts by weight of pigment, 0.5 to 30 parts by weight of inorganic fillers, 10 to 40 parts by weight of solvent naphtha, and 5 to 25 parts by weight of diethylene glycol monoethyl ether acetate.

The epoxy acrylate oligomer may be a diacrylate oligomer or a triacrylate oligomer with controlled viscosity, but is not limited thereto. The epoxy acrylate oligomer is included for the permanent ink to provide advantages, such as curing characteristic by the photoinitiator, prevention of yellowing, and improvement of adhesive strength.

The epoxy acrylate oligomer may be substituted with adipic acid at a concentration of 0.01 to 10 mol/L, but is not limited thereto. The epoxy acrylate oligomer is substituted with adipic acid to improve the hardening characteristic, the curing characteristic, and the insulating property.

The 1,3,5-triglycidyl isocyanurate (TGIC) may have a curing agent and increase the adhesive strength while improving the electric insulating property to stably form a coating layer.

The photoinitiator may be 2-methyl-4'-(methylthio)-2-morpholinopropiophenone, oligomeric alpha hydroxy ketone, 2-hydroxy-2-methyl-1-phenyl propane, or a mixture thereof, but is not limited thereto. The photoinitiator is included for the permanent ink so that it is coupled to the pigment with a rapid hardening speed to effectively represent the colors.

The pigment may be titanium dioxide (TiO₂) or zinc oxide (ZnO), but is not limited thereto. The pigment is included for the permanent ink so that it may have an ultraviolet absorption function and improve the insulating property of the permanent ink coating layer.

The inorganic filler may be barium sulfate, potassium permanganate (KMnO₄), or a similar compound thereto, but is not limited thereto. The inorganic filler is included for the permanent ink to improve a printability and a heat resistance.

The solvent includes naphtha or diethylene glycol monoethyl ether acetate (carbitol acetate) corresponding to aromatic hydrocarbons having 9 to 16 carbon atoms and a boiling point of 165°C to 290°C. The solvent is included for the permanent ink so that the viscosity of the permanent ink may be controlled by the solubility of the solvent.

In a step of coating with the permanent ink, a coated thickness of the permanent ink may be 80 to 120 µm, but is not limited thereto. If the coated thickness of the permanent ink is smaller than 80 µm, heat resistance and the sensitivity may be degraded and a circuit protection effect cannot be achieved and if the coating thickness exceeds 120 µm, under-cut which is a groove formed beside a conductor pattern due to the etching and premature curing may occur, which may reduce the wireless recognition efficiency of the RFID tag.

Further, according to an exemplary embodiment of the present disclosure, the manufacturing method may include a step S400 of molding the protective cap 400 in the PCB substrate 100 coupled with the antenna 200.

After coupling the antenna 200 to the PCB substrate 100 by means of the steps S100 to S300, the PCB substrate 100 may be molded to form the protective cap 400.

In the step S400, the molding or EMC molding may be performed by the epoxy resin coating to form the protective cap 400.

When the epoxy resin coating is performed, a length, a width, and a thickness of the epoxy resin coating may vary depending on the sizes of the RFID chip 300 and the PCB substrate 100.

The epoxy molding compound (EMC) material is an inorganic/organic composite material in which an inorganic material is blended based on a thermosetting polymer material which forms a three-dimensional curing structure by external heat to enhance the function of the material and has an advantage of excellent molding characteristic and mechanical characteristic.

According to the exemplary embodiment of the present disclosure, the manufacturing method may further include a step S500 of applying a primer on the PCB substrate 100 and a step S600 of applying a rubber solution on the PCB substrate 100 applied with a primer.

According to the present disclosure, the RFID tag is manufactured by including the step S500 of applying a primer to improve adhesive strength between the permanent ink formed of an epoxy material coated on a surface of the PCB substrate 100 and a rubber solution.

The primer may use a liquid polymer compound having a solid content of 26 to 30% and a viscosity of 800 to 1500 cps, but is not limited thereto.

As the primer has the solid content and the viscosity as described above, the wettability of the primer applied on the surface of the PCB substrate 100 is good so that the adhesive strength with the rubber solution may be improved and the reduction of the film thickness due to the sagging of the liquid application material before drying may be reduced.

The primer is a liquid mixture and may use polyamide, polyester, polyurethane, epoxy, synthetic resin, or polyolefin-based resin, but is not limited thereto. Desirably, the primer may be polyolefin-based resin.

The polyolefin-based resin may have reactive functional groups with at least one or more permanent inks and rubber solution, but is not limited thereto.

When the polyolefin-based resin is used for the primer, the adhesive strength with the permanent ink coated on the PCB substrate 200 and the rubber solution to be described below may be excellent and the adhesive strength may be excellent even at a use temperature of 100°C or higher.

The primer may include 45 to 50 parts by weight of xylene (C₆H₄(CH₃)₂), 25 to 35 parts by weight of ethyl benzene (C₈H₁₀), 1 to 5 parts by weight of zinc oxide (ZnO), 1 to 5 parts by weight of carbon black (C), 0.1 to 1.0 parts by weight of silica (SiO₂), 10 to 15 parts by weight of synthetic resin, and 5 to 10 parts by weight of modified polyethylene.

Further, the primer may further include graphene having a particle size of approximately 20 to 50 nm. The graphene may have at least one or more particle shapes selected from spherical, plate-shaped, needle-shaped, rod-shaped, and tubular shapes. Desirably, the graphene having a spherical particle shape may be used. In the case of the shapes other than the spherical shape, the graphene particle is formed in an angular shape so that the adhesive strength may be reduced due to the angular part. When the primer including the graphene is applied, the primer is less likely to run down and during a process of applying a rubber solution to be described below, the primer between the permanent ink coated on the PCB substrate 200 and the rubber solution may be firmly maintained. A specific surface area of the graphene may desirably be 1000 to 2000 m²/g, and more desirably, 1500 m²/g.

As the graphene, a graphene which is surface-processed to be modified may be used and the surface may be processed by irradiating with microwaves.

A particle size of the primer may be 10 to 60 nm, but is not limited thereto. Desirably, the particle size of the primer may be 30 to 40 nm.

When the particle size of the primer does not satisfy the condition, the smaller the particle size of the primer, the larger the specific surface area and the larger the contact interface. Therefore, effects of uniformly applying the primer while reducing the thickness of the primer applied on the surface of the RFID tag and improving the adhesive strength with the permanent ink surface coated on the surface of the PCB substrate 100 may be hindered.

In the step of applying the primer, a primer application method and an applied thickness are not limited. However, desirably, the primer may be applied with a thickness of 1 to 20 µm using a spray application method and the primer may be applied multiple times until a desired coating thickness is achieved. Specifically, the primer may be applied on the PCB substrate 100 with a thickness of 5 to 15 µm. When the primer is applied with the thickness using the application method, good wettability is provided to improve the adhesive strength with the permanent ink and the rubber solution and reduce the reduction of film thickness due to the sagging of the liquid application material before drying the primer.

Further, after the step S500 of applying the primer, the PCB substrate 200 on which the primer is applied may be dried using a drier. For example, the PCB substrate may be dried at a temperature of 50 to 100°C for 1 to 20 minutes, but is not limited thereto. Desirably, the PCB substrate may be dried at a temperature of 60 to 90°C for 1 to 10 minutes.

When the PCB substrate 100 on which the primer is applied is dried according to the drying condition, the adhesive strength with the permanent ink coated on the PCB substrate 100 and the rubber solution may be most excellent under the optimal primer drying state.

In the step S600 of applying the rubber solution on the PCB substrate 100 which has undergone the step as described above, when the rubber solution is applied, a raw rubber which remains after the blended rubber solution is applied and then the solution evaporates and a tire intermediate layer are formed on the same interface to improve the adhesive strength. Therefore, when the PCB substrate 100 on which the rubber solution is applied is directly inserted into the tire and integrally formed, the semi-permanent adhesive strength with the tire may be achieved. Therefore, the risk of damage from external impact may be reduced and the insulating property may be improved to suppress erroneous operation of the RFID tag and protect the RFID tag from the external moisture, thereby suppressing the corrosion of the RFID tag.

According to the present disclosure, the rubber solution may be prepared by mixing 40 to 100 parts by weight of inorganic filler, 0.1 to 10 parts of weight of a vulcanization agent, 2 to 10 parts by weight of a vulcanization accelerator, 6 to 12 parts by weight of lubricant, 4 to 10 parts by weight of zinc oxide, and 140 to 190 parts by weight of solvent based on 100 parts by weight of raw rubber.

The raw rubber may include natural rubber (NR), synthetic rubber (SR), or a mixture thereof and is used for a rubber composition for a normal tire, but is not limited thereto.

When the raw rubber is mixed with natural rubber and synthetic rubber, the synthetic rubber having excellent elasticity, abrasion resistance, and low-temperature property but a poor mechanical property is mixed with the natural rubber so that high mechanical property may be obtained.

The raw rubber may be composed of 10 to 50 wt% of natural rubber, synthetic rubber, or a mixture thereof.

The natural rubber is desirably polyisoprene rubber obtained from the nature.

The synthetic rubber may use one or more selected from a group consisting of styrene-butadiene rubber (SBR), modified styrene-butadiene rubber, butadiene rubber (BR), modified butadiene rubber, chlorosulphonated polyethylene rubber (CSM), epichlorohydrin rubber (ECO), fluoro rubber (FRM/FKM), silicon rubber (SI), vinyl-methyl silicone rubber (VMQ), fluorosilicone rubber (FMQ), acrylonitrile-butadiene rubber (NBR), hydrogenated nitrile rubber (HNBR), butyl rubber (isobutene-isoprene rubber (IIR)), nitrile butadiene rubber (NBR), modified nitrile butadiene rubber, chlorinated polyethylene rubber, styrene-ethylene-butylene-styrene rubber (SEBS), ethylene-propylene rubber (EPM), ethylene-propylene-diene rubber (EPDM), hypalon rubber, chloroprene rubber (CR), ethylene vinyl acetate rubber (EVM), ethylene-acrylic rubber (AEM), polyacrylate rubber (ACM), hydrin rubber, vinyl-benzyl-chloride-styrene-butadiene rubber, bromo-methyl-styrene-butyl rubber, malaysian styrene butadiene rubber, carboxylic styrene butadiene rubber (XSBR), epoxy isoprene rubber, malaysian ethylene propylene rubber, carboxylic nitrile butadiene rubber, and brominated polyisobutyl isoprene-co-paramethyl styrene (BIMS), but is not limited thereto.

The raw rubber may use a blended rubber in which natural rubber and synthetic rubber are mixed at a weight ratio of 50 : 50.

The blended rubber mixed at the weight ratio is used as the raw rubber so that advantages of the natural rubber having excellent wear resistance and the synthetic rubber having excellent oil resistance, corrosion resistance, and friction resistance are appropriately combined to improve the durability of the RFID tag.

The inorganic filler may be selected from a group consisting of carbon black, alumina, aluminosilicate, calcium carbonate (CaCO₃), diatomite, bentonite, montmorillonite, nontronite, beidellite, volkonskoite, hectorite, saponite, sauconite, vermiculite, halloisite, sericite, or a mixture thereof, but is not limited thereto. Desirably, the inorganic filler may be carbon black or calcium carbonate.

The carbon black may be of various origins and types commonly used. For example, the carbon black may be N110, N121, N134, N220, N231, N234, N242, N293, N299, S315, N326, N330, N332, N339, N343, N347, N351, N358, N375, N539, N550, N582, N630, N642, N650, N683, N754, N762, N765, N774, N787, N907, N908, N990, or N991.

The carbon black is included in the rubber solution so that the high surface area characteristic reinforces the rubber product and its fine particle diameter allows the carbon black to be easily dispersed in the rubber solution and improve a modeling speed and increase the durability, the oil resistance, and the heat resistance of the rubber product.

The carbon black may be 30 to 70 parts by weight based on 100 parts by weight of the raw rubber, in the rubber solution, but is not limited thereto. Desirably, the carbon black may be 40 to 60 parts by weight based on 100 parts by weight of the raw rubber, in the rubber solution.

Calcium carbonate may be various origins and various types commonly used and may be 10 to 30 parts by weight based on 100 parts by weight of the raw rubber in the rubber solution, but is not limited thereto. Desirably, the calcium carbonate may be 15 to 25 parts by weight based on 100 parts by weight of the raw rubber, in the rubber solution.

The vulcanization agent may be selected from a group consisting of inorganic vulcanization agents, such as powder sulfur (S), insoluble sulfur (S), precipitated sulfur (S), and colloid sulfur or organic vulcanization agents, such as tetramethylthiuram disulfide (TMTD), tetraethyltriuram disulfide (TETD), and dithiodimorpholine, among sulfur-based vulcanization agents, but is not limited thereto. Desirably, the vulcanization agent may be powder sulfur.

Hereinafter, the present disclosure will be described in more detail with reference to Exemplary Embodiments and Comparative Embodiments.

However, the following Exemplary Embodiments and Comparative Embodiments are just an example for describing the present disclosure in more detail, but the present disclosure is not limited to the following Exemplary Embodiments and Comparative Embodiments.

### <Exemplary Embodiment 1>

A PCB substrate 100 which was formed of FR-4 and had a front/rear width of 0.3 mm, an up/down width of 3.5 mm, a left/right length of 40 mm was used.

An antenna 200 having a helical structure was manufactured and a front/rear width of the inside of the antenna 200 was 0.35 mm. An RFID tag in which a space was formed by fitting the antenna 200 into the PCB substrate 100 was used.

### <Exemplary Embodiment 2>

The RFID tag which is the same as Example 1 except that a protective cap 400 was molded in an oval shape to cover the RFID chip 300 installed on the PCB substrate 100 and three turns of antenna 200 were inserted into the protective cap 400 was used.

### <Comparative Embodiment 1>

A PCB substrate 100 which was formed of FR-4 and had a front/rear width of 0.3 mm, up/down width of 3.5 mm, a left/right length of 40 mm was used.

An antenna 200 having a helical structure was manufactured and a front/rear width of the inside of the antenna 200 was 0.35 mm. An RFID tag in which a space was formed by fitting the antenna 200 into the PCB substrate 100 was used.

An RFID tag in which a space was not formed by fitting and then compressing the antenna 200 into the PCB substrate 100 was used.

### <Experimental Embodiment 1> - Adhesive strength test

In order to evaluate the improvement of the adhesive strength of the RFID tag manufactured by Exemplary Embodiments 1 and 2 and Comparative Embodiment 1, the RFID tag manufactured by Exemplary Embodiments 1 and 2 and Comparative Embodiment 1 was directly inserted and integrally molded in the intermediate layer of the tire to manufacture a tire specimen with a thickness of 1.0 cm, a length of 11, and a width of 3 cm to measure a bonding strength by the ASTM D429 (Method B) test method.

After leaving the tire specimen attached with the RFID tag manufactured by Exemplary Embodiments and Comparative Embodiments at room temperature for 30 minutes, the bonding strength was evaluated by separating the RFID tag using a universal testing machine at a speed of 100 mm/min and an average value obtained by measuring five bonded specimens was represented in Table 1. Here, the bonding strength is a value obtained by dividing a width of a bonded specimen by an average load.

**[Table 1]**

| Classification | Bonding strength (N/70 mm) |
|---|---|
| Exemplary Embodiment 1 | 11.1 |
| Exemplary Embodiment 2 | 11.9 |
| Comparative Embodiment 1 | 9.1 |

As seen from Table 1, it can be confirmed that the bonding strength of the wireless RFID tag to be embedded in a tire according to Exemplary Embodiment 1 is improved as compared with Comparative Embodiment 1.

Further, referring to Exemplary Embodiment 2, it can be confirmed that in Exemplary Embodiment 2 in which the protective cap 200 is molded to be formed in an oval shape, the bonding strength is improved as compared with that of Exemplary Embodiment 1.

### <Experimental Embodiment 2> - Durability test

The durability test was conducted to simulate the full service life of the tire in a short time, to estimate the real-world performance. The durability test condition was set as follows: speed of 200 to 240 km/h, a load of 440 to 830 kg, an air pressure of 44 to 51 psi, a temperature of 35 to 40°C, and a running time of 60 to 80 minutes. The test was conducted by driving at 200 km/h which is twice a normal speed for 20 minutes, followed by 210 km/h for 10 minutes, 220 km/h for 10 minutes, 230 km/h for 20 minutes, and 240 km/h for 10 minutes.

The mileage was measured in increments of 10000 km and a state of the tag was checked at every 10000 km.

**[Table 2]**

| Mileage | Exemplary Embodiment 1 | Exemplary Embodiment 2 | Comparative Embodiment 1 |
|---|---|---|---|
| 10,000 km | Good | Good | Good |
| 20,000 km | Good | Good | Good |
| 30,000 km | Good | Good | Partially defective |
| 40,000 km | Good | Good | Defective |
| 50,000 km | Partially defective | Good | Defective |
| 60,000 km | Defective | Partially defective | Defective |

As seen from Table 2, it can be confirmed that the durability of the wireless RFID tag to be embedded in a tire according to Exemplary Embodiments 1 and 2 is improved as compared with Comparative Embodiment 1 and specifically, the durability of the wireless RFID tag to be embedded in a tire according to Exemplary Embodiment 2 is the most excellent.

As described above, the detailed description of the exemplary embodiments of the disclosed present disclosure is provided such that those skilled in the art implement and carry out the present disclosure. While the present disclosure has been described with reference to the preferred embodiments, it will be understood by those skilled in the art that various changes and modifications of the present disclosure may be made without departing from the spirit and scope of the invention. For example, those skilled in the art may use configurations disclosed in the above-described exemplary embodiments by combining them with each other.

Therefore, the present disclosure is not intended to be limited to the above-described exemplary embodiments but to assign the widest scope consistent with disclosed principles and novel features.

The present disclosure may be implemented in another specific form within the scope without departing from the spirit and essential feature of the present disclosure. Therefore, the detailed description should not restrictively be analyzed in all aspects and should be exemplarily considered. The scope of the present disclosure should be determined by rational interpretation of the appended claims and all changes are included in the scope of the present disclosure within the equivalent scope of the present disclosure. The present disclosure is not intended to be limited to the above-described exemplary embodiments but to assign the widest scope consistent with disclosed principles and novel features. Further, claims having no clear quoting relation in the claims are combined to configure the embodiment or may be included as new claims by correction after application.

### [EXPLANATION OF REFERENCE NUMERALS AND SYMBOLS]

100: PCB substrate
200: Antenna
300: RFID chip
400: Protective cap
101: Rubber insertion hole
105: Fitting hole

## Claims

1. A wireless RFID tag to be embedded in a tire, comprising:
a PCB substrate having a predetermined length;
an antenna which has a predetermined length and is formed in a helical shape to be fitted along a length direction of the PCB substrate; and
an RFID chip which is installed in a center portion of the PCB substrate and wirelessly receives data from the antenna,
wherein a front/rear width of an inside configured by the helical shape of the antenna is formed to be larger than a front/rear width of the PCB substrate so that the PCB substrate and the antenna are spaced apart from each other with a predetermined interval to form a space.

2. The wireless RFID tag to be embedded in a tire of claim 1, wherein fitting holes are formed in a left side and a right side of the PCB substrate and one end of the antenna is fitted into the left fitting hole of the PCB substrate and the other end of the antenna is coupled to the right fitting hole of the PCB substrate.

3. The wireless RFID tag to be embedded in a tire of claim 1, further comprising:
a protective cap molded on the PCB substrate to protect the RFID chip,
wherein a part of the antenna is inserted into the protective cap to maintain a constant interval between the RFID chip and the antenna.

4. The wireless RFID tag to be embedded in a tire of claim 1, wherein at least one rubber insertion hole is formed along the length direction of the PCB substrate.

5. A manufacturing method of a wireless RFID tag to be embedded in a tire, comprising:
a step of preparing a PCB substrate attached with an RFID chip which wirelessly receives data from an antenna;
a step of preparing a metal antenna which has a predetermined length and is formed in a helical shape, in which a front/rear width of an inside configured by the helical shape is larger than a front/rear width of the PCB substrate; and
a step of inserting the antenna into an end of the PCB substrate to be fitted.

6. The manufacturing method of a wireless RFID tag to be embedded in a tire of claim 5, further comprising:
a step of molding a protective cap on the PCB substrate coupled with the antenna;
a step of applying a primer on the PCB substrate; and
a step of applying a rubber solution on the PCB substrate.

7. The manufacturing method of a wireless RFID tag to be embedded in a tire of claim 5, further comprising:
a step of forming at least one rubber insertion hole along a length direction of the PCB substrate.
